# EUROPÄISCHE PATENTSCHRIFT

(11) **EP 3 802 257 B1**
(45) Veröffentlichungstag und Bekanntmachung des Hinweises auf die Patenterteilung: **09.08.2023**
(21) Anmeldenummer: 19725926.0
(22) Anmeldetag: 03.05.2019
(51) Int. Cl.: B60W 30/18, B60W 50/00

(54) **STEUERUNG EINES KRAFTFAHRZEUGS**
CONTROL OF A MOTOR VEHICLE
COMMANDE D'UN VÉHICULE À MOTEUR

(30) Priorität: 24.05.2018 DE 102018208207
(43) Veröffentlichungstag der Anmeldung: 14.04.2021
(73) Patentinhaber: Bayerische Motoren Werke Aktiengesellschaft, 80809 München (DE)
(72) Erfinder: CAM, Önder, 13355 Mitte (Wedding) Berlin (DE)
(86) Internationale Anmeldenummer: PCT/DE2019/100399
(87) Internationale Veröffentlichungsnummer: WO 2019/223833

(56) Entgegenhaltungen:
- EP-A2- 3 141 867
- DE-A1-102015 000 856
- DE-A1-102015 225 238
- DE-A1-102016 210 745
- US-A1- 2009 015 596
- US-A1- 2012 245 817

## Beschreibung

Die Erfindung betrifft die Steuerung eines Kraftfahrzeugs. Insbesondere betrifft die Erfindung die Steuerung eines Kraftfahrzeugs in Querrichtung, um eine vorbestimmte Fahrspur einzuhalten.

Ein Kraftfahrzeug kann einen Spurhalteassistenten umfassen, der dazu eingerichtet ist, das Kraftfahrzeug innerhalb einer gekennzeichneten Fahrspur zu halten. Dadurch kann verhindert werden, dass das Kraftfahrzeug mit einem Objekt oder einem anderen Kraftfahrzeug kollidiert, die rechts oder links neben der Fahrspur liegen können. Der Spurhalteassistent tastet üblicherweise eine Umgebung des Kraftfahrzeugs ab und bestimmt eine Trajektorie, der zu folgen ist, um das Kraftfahrzeug innerhalb der Fahrspur zu halten. Die Abtastung kann aber beliebig schwierig sein, beispielsweise wenn bestehende Lichtverhältnisse eine optische Abtastung erschweren, eine Fahrbahnmarkierung abschnittweise fehlt oder eine befahrene Fahrbahn über eine bevorstehende Kuppe führt. In manchen Fällen kann die Trajektorie dann nicht oder nicht zuverlässig bestimmt werden, sodass der Spurhalteassistent unter Umständen keinen Sicherheitsgewinn bieten kann.

Die Trajektorie könnte auf der Basis von Kartendaten verbessert bestimmt werden, jedoch sind hierfür hochgenaue und aktuelle Kartendaten sinnvoll, die an Bord des Kraftfahrzeugs nicht verfügbar sein können. Weniger genaue oder aktuelle Kartendaten können beispielsweise einem Navigationssystem an Bord des Kraftfahrzeugs entnommen werden, jedoch kann nicht allgemein beurteilt werden, ob sich der Verlauf einer Strecke laut den Kartendaten mit einem tatsächlichen Verlauf der Strecke deckt oder nicht. Die Verwendung von grob falschen Kartendaten könnte ein Bestimmungsergebnis für die Trajektorie noch verschlechtern.

DE 10 2015 225 238 A betrifft eine Technik zur automatischen Steuerung eines Folgefahrzeugs mit einem Scout-Fahrzeug. DE 10 2016 210 745 A schlägt vor, eine Fahrzeugtrajektorie mit einem Weg zwischen Punkten auf einer Karte zu vergleichen. DE 10 2015 000 856 A zeigt eine Einrichtung zur Längssteuerung eines Kraftfahrzeugs, wobei aktualisierte Informationen zur Anpassung einer Fahrzeuggeschwindigkeit verwendet werden. US 2009/0015596 A regt an, eine digitale Karte auf der Basis einer Abstraktionsschicht für verschiedene Kartenformate anzuzeigen oder zu editieren.

Eine der Erfindung zu Grunde liegende Aufgabe besteht darin, eine verbesserte Technik zur Steuerung des Kraftfahrzeugs anzugeben. Die Erfindung löst diese Aufgabe mittels der Gegenstände der unabhängigen Ansprüche. Unteransprüche geben bevorzugte Ausführungsformen wieder.

Nach einem ersten Aspekt der Erfindung umfasst ein erstes Verfahren Schritte des Erfassens einer ersten Trajektorie eines ersten Kraftfahrzeugs beim Durchfahren einer vorbestimmten Strecke; des Bestimmens eines Verlaufs der Strecke auf der Basis vorbestimmter Kartendaten; des Bestimmens einer Güte, mit der die Trajektorie und der Verlauf übereinstimmen; und des Übermittelns der Güte an ein zweites Kraftfahrzeug. Dabei umfasst die erste Trajektorie eine Anzahl Positionen des ersten Kraftfahrzeugs und die Güte ist umso höher, je größer eine Dichte von Positionen erster Kraftfahrzeuge ist.

Je mehr erste Kraftfahrzeuge ihre Positionen bereitstellen, desto mehr erste Trajektorien können bestimmt werden und umso größer kann die Dichte der Positionen an einer Stelle der Strecke sein. Dadurch kann der Verlauf der Strecke mit größerer Sicherheit bewertet werden, was sich in einer erhöhten Güte niederschlagen kann.

Auf der Basis der Güte kann beurteilt werden, ob die Kartendaten für eine bestimmte Verwendung zugelassen werden können oder nicht. Die Verwendung kann insbesondere die Steuerung eines zweiten Kraftfahrzeugs auf der Strecke umfassen. Die Güte kann seitens des ersten Kraftfahrzeugs, seitens des zweiten Kraftfahrzeugs oder seitens einer zentralen Stelle erfolgen, die bevorzugt nicht mobil ist. Die Kraftfahrzeuge können beispielsweise drahtlos mit der zentralen Stelle kommunizieren.

Bevorzugt wird eine Vielzahl erster Trajektorien erster Kraftfahrzeuge erfasst, wobei die Güte bezüglich der Vielzahl Trajektorien bestimmt wird. Die Bestimmung kann permanent erfolgen. So können Positionsinformationen einer Flotte von ersten Kraftfahrzeugen dazu genutzt werden, das zweite Kraftfahrzeug verbessert zu steuern. Das zweite Kraftfahrzeug kann seine Trajektorie beim Durchfahren der Strecke bestimmen und als erstes Kraftfahrzeug bereitstellen, sodass der Verlauf der Strecke bei erneuter Anwendung der Technik gefestigt oder stärker gewichtet sein kann.

Die Güte kann bezüglich ersten Trajektorien bestimmt werden, die beim Durchfahren der Strecke innerhalb eines vorbestimmten, zurückliegenden Zeitraums erfasst wurden. Anders ausgedrückt kann eine Güte nur bezüglich ersten Trajektorien bestimmt werden, die nicht älter als ein vorgestimmtes Alter sind. Dieses maximale Alter kann in Stunden, Tagen, Wochen oder Monaten vorbestimmt sein. Dadurch kann verhindert werden, dass eine Änderung an der Strecke, beispielsweise durch Bauarbeiten oder ein liegen gebliebenes Fahrzeug, länger unberücksichtigt bleibt.

Zwischen der ersten Trajektorie und dem Verlauf kann ein Abstand bestimmt werden, wobei die Güte umso höher ist, je kleiner der Abstand ist. Ist der Abstand null, so kann die Güte maximal sein. Der Abstand kann über eine Länge der Strecke aufsummiert oder aufintegriert werden, um die Güte bezüglich der gesamten Strecke zu bestimmen. Der Abstand kann auch beispielsweise quadratisch aufsummiert werden, um auch kurze Abweichungen gebührend zu berücksichtigen.

Die Strecke kann als Serie von Positionen bestimmt sein, insbesondere Positionen, die in zeitliche gleichen Abständen bestimmt sind. Die Güte kann umso niedriger sein, je stärker eine Krümmung der Strecke bei gleicher Dichte von Positionen ist. Dadurch kann berücksichtigt werden, dass die Strecke insbesondere im Bereich einer starken Krümmung besonders genau bekannt sein muss, um eine sichere Steuerung durchführen zu können. Eine geringe Anzahl von Positionen pro Fahrstrecke kann auf einer geraden Strecke ausreichen; mit zunehmender Krümmung können aber immer mehr Positionen pro Fahrstrecke erforderlich sein, um den tatsächlichen Verlauf korrekt abbilden oder bewerten zu können. So kann auf der Basis von nur wenigen Trajektionsinformationen eine hohe Güte auf einem schwach gekrümmten Streckenabschnitt bestimmt werden, aber eine niedrige Güte auf einem stark gekrümmten Streckenabschnitt. Die Kartendaten können im schwach gekrümmten Abschnitt der Strecke für eine Steuerung eines anderen Kraftfahrzeugs verwendet werden, im stark gekrümmten jedoch nicht.

Nach einem zweiten Aspekt der Erfindung umfasst ein zweites Verfahren Schritte des Bestimmens eines Verlaufs einer Strecke auf der Basis vorbestimmter Kartendaten; des Erfassens einer dem Verlauf zugeordneten Güte; des Abtastens eines Umfelds eines zweiten Kraftfahrzeugs; des Bestimmens einer zweiten Trajektorie durch Fusionieren des Verlaufs mit der Abtastung; und des Steuerns des zweiten Kraftfahrzeugs, der zweiten Trajektorie zu folgen.

Das zweite Verfahren kann insbesondere mit der durch das erste Verfahren bestimmten Güte arbeiten. Das zweite Kraftfahrzeug kann verbessert auf der Basis der lokal verfügbaren Kartendaten gesteuert werden, wenn diesen ausreichend hohe Güten zugeordnet sind. Nur inkorrekte oder ungenaue Kartendaten können für die Steuerung des zweiten Kraftfahrzeugs missachtet werden.

Bevorzugt ist eine Gewichtung des Verlaufs beim Fusionieren abhängig von der Güte, die dem Verlauf zugeordnet ist. Ein Verlauf mit einer hohen Güte kann so stärker gewichtet werden als ein Verlauf mit einer geringen Güte. So kann die Fusion dynamisch bezüglich sich über die Länge der Strecke ändernder Güten durchgeführt werden.

Die zweite Trajektorie kann nur dann auf der Basis des Verlaufs bestimmt werden, wenn die zugeordnete Güte ein vorbestimmtes Maß erreicht. Fällt die bestimmte Güte unter das vorbestimmte Maß, so kann eine Verbesserung des Bestimmungsergebnisses durch Einbeziehen der Kartendaten nicht sichergestellt werden. Das Verwerfen solcher Kartendaten beim Fusionieren kann eine Fahrsicherheit des zweiten Kraftfahrzeugs sicherstellen.

Nach einem weiteren Aspekt der Erfindung umfasst eine Steuervorrichtung für ein zweites Kraftfahrzeug einen Datenspeicher für Kartendaten bezüglich eines Verlaufs einer Strecke; eine Empfangseinrichtung zum Empfangen einer dem Verlauf zugeordneten Güte; eine Abtasteinrichtung zur Abtastung eines Umfelds des zweiten Kraftfahrzeugs; und eine Verarbeitungseinrichtung, die dazu eingerichtet ist, eine zweite Trajektorie durch Fusionieren des Verlaufs mit der Abtastung zu bestimmen; und eine Steuervorrichtung zur Steuerung des zweiten Kraftfahrzeugs, um der zweiten Trajektorie zu folgen. Ein Kraftfahrzeug, insbesondere ein Personenkraftfahrzeug, kann die Steuervorrichtung umfassen.

Eine zentrale Einrichtung umfasst eine Empfangseinrichtung zum Empfangen einer ersten Trajektorie eines ersten Kraftfahrzeugs beim Durchfahren einer vorbestimmten Strecke; eine Verarbeitungseinrichtung zum Bestimmen eines Verlaufs der Strecke auf der Basis vorbestimmter Kartendaten und zum Bestimmen einer Güte, mit der die Trajektorie und der Verlauf übereinstimmen; eine Sendeeinrichtung zur Übermittlung der Güte an ein zweites Kraftfahrzeug. Die Empfangseinrichtung und die Sendeeinrichtung können miteinander integriert ausgeführt sein. Bevorzugt ist die zentrale Einrichtung als Server oder Dienst in einer Cloud realisiert.

Eine der hierin genannten Verarbeitungseinrichtungen kann dazu eingerichtet sein, eines der hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile der hierin beschriebenen Verfahren, der Vorrichtung und der zentralen Einrichtung können untereinander übertragen werden.

Die Erfindung wird nun mit Bezug auf die beigefügten Zeichnungen genauer beschrieben, in denen:
- Figur 1: ein System und
- Figur 2: ein Ablaufdiagramm eines Verfahrens
illustriert.

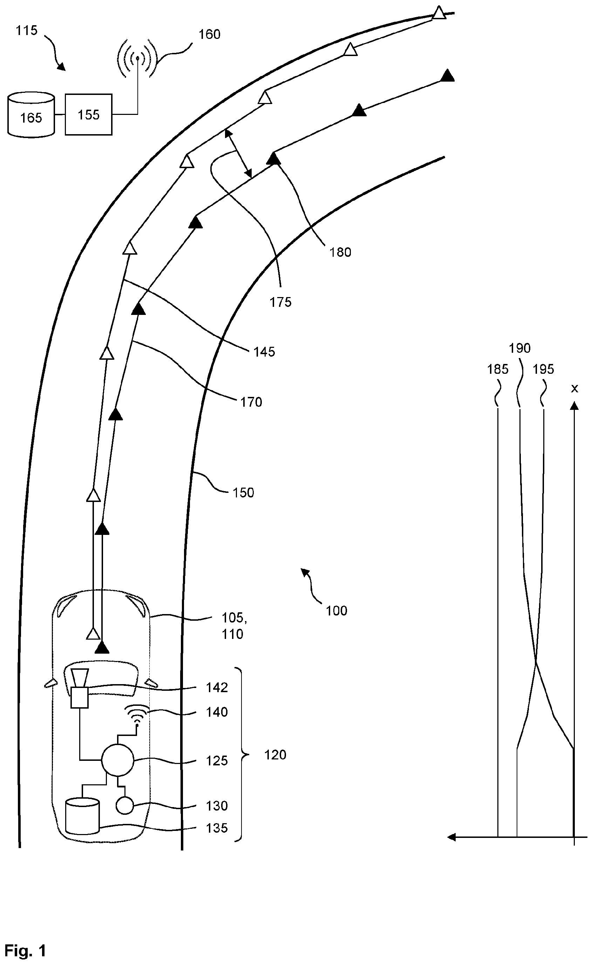

Figur 1 zeigt ein System 100 mit einem ersten Kraftfahrzeug 105, einem zweiten Kraftfahrzeug 110 und einer optionalen zentralen Stelle 115. Das erste und das zweite Kraftfahrzeug 105, 110 sind hier als nur ein Fahrzeug dargestellt, da sich ihre Ausstattungen weitgehend ähneln und das zweite Kraftfahrzeug 110 im Sinne einer hierin vorgestellten Technik auch als erstes Kraftfahrzeug 105 aufgefasst werden kann.

An Bord des ersten Kraftfahrzeugs 105 ist bevorzugt eine Vorrichtung 120 mit einer Verarbeitungseinrichtung 125, einer Positioniereinrichtung 130 und einer Kommunikationseinrichtung 140 angebracht. An Bord des zweiten Kraftfahrzeugs 110 ist bevorzugt eine entsprechende Vorrichtung 115 angebracht, die zusätzlich einen Datenspeicher 135 für Kartendaten sowie wenigstens einen Sensor 142 zur Abtastung eines Umfelds umfasst. Für das zweite Kraftfahrzeug 110 kann die Positioniereinrichtung 130 auch entfallen, falls das zweite Kraftfahrzeug 110 nicht auch als erstes Kraftfahrzeug 105 eingesetzt werden soll.

Der Datenspeicher 135 kann Teil eines Navigationssystems des Kraftfahrzeugs 105, 110 sein und umfasst bevorzugt Kartendaten, die einen Verlauf 145 einer Strecke 150 enthält, welche das Kraftfahrzeug 105, 110 befährt. Die Positioniereinrichtung 130 kann insbesondere einen Empfänger für Navigationssignale eines satellitengestützten Navigationssystems umfassen. Andere Sensoren sind jedoch auch möglich, beispielsweise ein Inertialsystem, ein Odometer oder ein Lagesensor. Die Positioniereinrichtung 130 stellt bevorzugt eine Position bereit, an der sich das Kraftfahrzeug 105, 110 aktuell befindet. Zusätzlich können eine Geschwindigkeit, eine Bewegungsrichtung und/oder eine Beschleunigung bereitgestellt werden.

Der Sensor 142 kann beispielsweise eine oder mehrere optische Kameras, einen Radarsensor oder einen Lidarsensor umfassen und ist dazu eingerichtet, das Umfeld des zweiten Kraftfahrzeugs 110 berührungslos abzutasten. Auf der Basis abgetasteter Sensordaten kann die Verarbeitungseinrichtung 125 eine Steuerung des zweiten Kraftfahrzeugs 110 derart durchführen oder veranlassen, dass das zweite Kraftfahrzeug möglichst sicher in einer Fahrspur gehalten ist, die der Strecke 150 folgt. Die Kommunikationseinrichtung 140 ist bevorzugt zur drahtlosen Kommunikation eingerichtet und kann eine Sendeeinrichtung und/oder eine Empfangseinrichtung umfassen. Die Kommunikation erfolgt üblicherweise über ein Mobilfunknetz und kann eines oder mehrere weitere Netze benutzen, beispielsweise das Internet oder ein privates Netzwerk.

Die zentrale Stelle 115 umfasst bevorzugt eine Verarbeitungseinrichtung 155, die mit einer Kommunikationseinrichtung 160 und/oder einem Datenspeicher 165 verbunden sein kann. Die Kommunikationseinrichtung 160 ist bevorzugt zur Kommunikation mit wenigstens einem der Kraftfahrzeuge 105, 110 eingerichtet und kann drahtlos oder drahtgebunden ausgeführt sein. Der Datenspeicher 165 kann dazu eingerichtet sein, eine Vielzahl Trajektorien abzuspeichern, wie unten noch genauer beschrieben wird. Außerdem sind im Datenspeicher 165 bevorzugt Kartendaten abgelegt, die den Kartendaten im Datenspeicher 135 des zweiten Kraftfahrzeugs 110 entsprechen. Die Verarbeitungseinrichtung 155 ist bevorzugt zur Verarbeitung von Trajektorien und den Kartendaten eingerichtet.

Es wird vorgeschlagen, dass das erste Kraftfahrzeug 105 beim Befahren der Strecke 150 eine erste Trajektorie 170 aufzeichnet, die mit dem Verlauf 145 der Strecke 150 laut den Kartendaten in den Datenspeichern 135, 165 verglichen werden kann. Es wird davon ausgegangen, dass das erste Kraftfahrzeug 105 die Strecke 150 korrekt durchfährt, also der Strecke 150 folgt, ohne diese zu verlassen, dabei auf einer zugeordneten Straßenseite (rechts bei Rechtsverkehr, links bei Linksverkehr) bleibt und eine zugewiesene Fahrspur, falls vorgesehen, nicht verlässt. Da diese Einschätzung unrealistisch ist, können erste Trajektorien 170 einer Vielzahl erster Kraftfahrzeuge 105 in ähnlicher Weise verarbeitet werden, sodass Abweichungen von der Annahme im Mittel entfallen können. Je größer die Anzahl erster Trajektorien 170 unterschiedlicher erster Kraftfahrzeuge 110 ist, desto besser kann die Annahme im Mittel eingehalten sein. Im Folgenden wird zur einfacheren Erklärung zunächst von nur einer ersten Trajektorie 170 ausgegangen.

Dann wird bestimmt, wie gut die erste Trajektorie 170 dem Verlauf 145 der Strecke 150 folgt. Ein Maß für die Qualität des Folgens kann als Güte angegeben werden. Die Bestimmung kann an Bord des ersten Kraftfahrzeugs 105 erfolgen, falls dieses die entsprechenden Kartendaten verfügbar hat. Bevorzugt wird die erste Trajektorie 170 jedoch an die zentrale Stelle 115 übermittelt und dort ausgewertet. Die Bestimmung kann insbesondere berücksichtigen, wie groß ein Abstand 175 zwischen dem Verlauf 145 und der ersten Trajektorie 170 ist. Je größer der Abstand 175 ist, desto weniger gut folgt die erste Trajektorie 170 dem ersten Verlauf 145 und desto geringer kann die bestimmte Güte sein. Der zur Bildung der Güte verwendete Abstand 175 kann über die Länge der Strecke 150 betrachtet werden und beispielsweise einen maximalen bestimmten Abstand 175 oder ein Integral des Abstands 175 über die Länge der Stecke 150 betreffen.

Die erste Trajektorie 170 kann als Serie von Positionen 180 bestimmt sein, die in Figur 1 durch dunkle Dreiecke angedeutet sind. Je dichter Positionen 180 in einem Abschnitt der Strecke 150 liegen, desto größer kann die Güte in diesem Abschnitt bestimmt werden. Dem liegt die Überlegung zu Grunde, dass einzelne Messfehler oder Abweichungen von oben formulierter Annahme beim Berücksichtigen von Informationen mehrerer erster Trajektorien 170 weniger stark ins Gewicht fallen.

Im rechten Bereich von Figur 1 sind beispielhafte Verläufe von Kennzahlen entlang einer Länge x der dargestellten Strecke 150 gezeigt. Ein erster Verlauf 185 betrifft die örtliche Dichte von Positionen 180, die im vorliegenden Beispiel beispielhaft konstant ist. Ein zweiter Verlauf 190 betrifft eine Krümmung der Strecke 150. Die Krümmung beträgt zunächst null und wird entlang der Länge x der Strecke 150 allmählich größer. Je größer die Krümmung ist, desto größer muss ein Lenkwinkel eines Kraftfahrzeugs 105, 110 gewählt werden, um die Strecke 150 nicht zu verlassen. Gleichzeitig wird mit steigender Krümmung der Strecke 150 die Auswirkung einer Abweichung des Lenkwinkels von einem korrekten Lenkwinkel auch größer. Im Bereich einer stark gekrümmten Strecke 150 besteht also ein erhöhter Bedarf an möglichst genauen Karteninformationen oder an einer zuverlässigen Aussage über die Verlässlichkeit der bestehenden Karteninformationen. Es wird daher vorgeschlagen, die Güte umso kleiner zu bestimmen, je größer die Krümmung der Strecke 150 ist. Ein dritter Verlauf 195 zeigt diesen Zusammenhang.

Besonders bevorzugt wird die Dichte durch die Krümmung geteilt und die Güte wird in Abhängigkeit des dabei entstehenden Faktors gebildet. Ein hoher Faktor kann eine hohe Güte und ein niedriger Faktor eine niedrige Güte bewirken. Beispielsweise kann eine hohe Dichte von Positionen im Bereich einer starken Krümmung immer noch zu einer akzeptablen Güte führen.

Die bestimmte Güte, die einer Strecke 150 zugeordnet ist, wird dann an das zweite Kraftfahrzeug 110 übermittelt, welches in Abhängigkeit der Güte die Karteninformationen des Datenspeichers 135 in die Bestimmung einer zweiten Trajektorie (nicht dargestellt) einfließen lassen kann. Die zweite Trajektorie verläuft ideal derart entlang der Strecke 150, dass das zweite Kraftfahrzeug 110 sie befolgen kann und dabei weder die Strecke 150 noch eine ihm zugeordnete Fahrspur verlässt, falls diese vorgegeben ist. Außerdem kann das zweite Kraftfahrzeug 110 auf einer ihm zugeordneten Seite der Strecke 150 bleiben, wie oben auch als Annahme für die erste Trajektorie 170 beschrieben wurde. Weitere Datenquellen für die Bestimmung der zweiten Trajektorie können der oder die Sensoren 142 sein, mit deren Sensordaten die Karteninformationen im Datenspeicher 135 fusioniert werden können. Es wird nicht empfohlen, die Kartendaten vollständig ohne aktuelle Sensordaten aus dem Umfeld des zweiten Kraftfahrzeugs 110 einer Bestimmung der zweiten Trajektorie zu Grunde zu legen.

Ist die Güte hoch, so kann der Einfluss der Kartendaten auf die bestimmte zweite Trajektorie groß sein, ist die Güte gering, so kann auch ihr Einfluss geringer sein. In einer Ausführungsform werden Kartendaten ignoriert, deren zugeordnete Güte unterhalb eines vorbestimmten Schwellenwerts liegt. Das zweite Kraftfahrzeug 110 kann dann gesteuert werden, der bestimmten zweiten Trajektorie zu folgen. Dazu kann beispielsweise ein Lenkwinkel des zweiten Kraftfahrzeugs 110 aktiv beeinflusst werden.

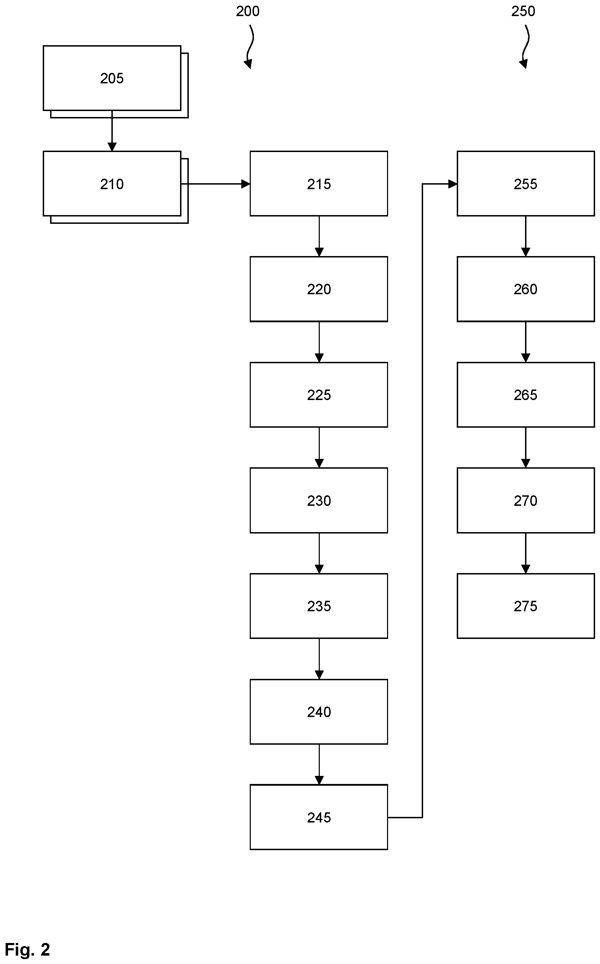

Figur 2 zeigt ein Ablaufdiagramm eines ersten Verfahrens 200 und eines zweiten Verfahrens 250. Die Verfahren 200, 250 werden bevorzugt in Verbindung mit einem System 100 ausgeführt. Dabei können einzelne Teile der Verfahren 200, 250 an verschiedenen Orten ausgeführt werden. Der Darstellung von Figur 2 liegt eine bevorzugte Aufteilung zu Grunde, bei der in einem linken Bereich dargestellte Schritte der Verfahren 2000, 250 an Bord des ersten Kraftfahrzeugs 105, in einem mittleren Bereich dargestellte Schritte seitens der zentralen Stelle 115 und in einem rechten Bereich dargestellte Schritte seitens des zweiten Kraftfahrzeugs 110 durchgeführt werden.

In einem Schritt 205 kann eine Position 180 des ersten Kraftfahrzeugs 105 bestimmt werden, die in einem Schritt 210 an die zentrale Stelle 115 übermittelt werden können. Die Schritte 205 und 210 werden bevorzugt fortlaufend ausgeführt. Weiter bevorzugt sind mehrere erste Kraftfahrzeuge 105 vorgesehen, welche die Schritte 205 und 210 unabhängig voneinander ausführen können.

Die zentrale Stelle 115 kann in einem Schritt 215 die Positionen 180 empfangen und in einem Schritt 220 die erste Trajektorie 170 bestimmen. In einem Schritt 225 kann der Verlauf 145 der Strecke 150 nach Karteninformationen bestimmt werden. Eine Quantelung der ersten Trajektorie 170 und des Verlaufs 145 in einzelne Positionen kann durch die Bildung jeweils kontinuierlicher Kurven behandelt werden.

Anschließend kann die Güte bestimmt werden, mit welcher die erste Trajektorie 170 dem Verlauf 145 folgt oder umgekehrt. Dazu kann in einem Schritt 230 eine Abweichung 175 zwischen den Kurven bestimmt werden. In einem Schritt 235 können eine Dichte von Positionen im Bereich der Strecke 150 und/oder eine Krümmung der Strecke 150 bestimmt werden. Auf der Basis wenigstens eines dieser Parameter wird dann die Güte in einem Schritt 240 bestimmt, wie oben genauer beschrieben ist.

In einem Schritt 245 kann die der Strecke 250 zugeordnete Güte an das erste Kraftfahrzeug 105 übermittelt werden, welches die Güte in einem Schritt 255 empfangen kann. In einem Schritt 260 kann dann die Güte bewertet werden. Liegt sie beispielsweise unterhalb eines vorbestimmten Schwellenwerts, so kann eine weitere Verarbeitung unterbleiben. Andernfalls kann in einem Schritt 265 eine Fusionierung von Karteninformationen der Strecke 150, insbesondere des Verlaufs 145, mit Sensordaten des zweiten Kraftfahrzeugs 110 erfolgen. Je größer die bestimmte Güte ist, desto stärker kann der Verlauf 145 berücksichtigt werden.

Auf der Basis der fusionierten Daten kann in einem Schritt 270 eine zweite Trajektorie bestimmt werden und das zweite Kraftfahrzeug 110 kann in einem Schritt 275 so gesteuert werden, dass es der zweiten Trajektorie folgt.

### Bezugszeichen

- 100: System
- 105: erstes Kraftfahrzeug
- 110: zweites Kraftfahrzeug
- 115: zentrale Stelle
- 120: Vorrichtung
- 125: Verarbeitungseinrichtung
- 130: Positioniereinrichtung
- 135: Datenspeicher
- 140: Kommunikationseinrichtung
- 142: Sensor
- 145: Verlauf
- 150: Strecke
- 155: Verarbeitungseinrichtung
- 160: Datenspeicher
- 165: Kommunikationseinrichtung
- 170: erste Trajektorie
- 175: Abstand
- 180: Position
- 185: erster Verlauf: Dichte
- 190: zweiter Verlauf: Krümmung
- 195: dritter Verlauf: Güte

- 200: Verfahren
- 205: Bestimmen Position erstes Kraftfahrzeug
- 210: Übermitteln
- 215: Empfangen
- 220: Bestimmen erste Trajektorie
- 225: Bestimmen Streckenverlauf nach Kartendaten
- 230: Bestimmen Abweichung erste Trajektorie von Strecke
- 235: Bestimmen Krümmung, Dichte
- 240: Bestimmen Güte
- 245: Übermitteln
- 250: Verfahren
- 255: Empfangen
- 260: Güte beurteilen
- 265: Fusionieren mit Sensordaten
- 270: Bestimmen zweite Trajektorie
- 275: Steuern zweites Kraftfahrzeug

## Patentansprüche

1. Verfahren (200) mit folgenden Schritten:
- Erfassen (215) einer ersten Trajektorie (170) eines ersten Kraftfahrzeugs (105) beim Durchfahren einer vorbestimmten Strecke (150);
- Bestimmen (225) eines Verlaufs (145) der Strecke (150) auf der Basis vorbestimmter Kartendaten;
- Bestimmen (240) einer Güte, mit der die erste Trajektorie (170) und der Verlauf (145) übereinstimmen;
- Übermitteln (245) der Güte an ein zweites Kraftfahrzeug (110);
- **dadurch gekennzeichnet, dass** die erste Trajektorie (170) eine Anzahl Positionen (180) des ersten Kraftfahrzeugs (105) umfasst und die Güte umso höher ist, je größer eine Dichte von Positionen (180) erster Kraftfahrzeuge (105) ist.

2. Verfahren (200) nach Anspruch 1, wobei eine Vielzahl erster Trajektorien (170) erster Kraftfahrzeuge (105) erfasst und die Güte bezüglich der Vielzahl erster Trajektorien (170) bestimmt wird

3. Verfahren (200) nach Anspruch 2, wobei die Güte bezüglich erster Trajektorien (170) bestimmt wird, die beim Durchfahren der Strecke (150) innerhalb eines vorbestimmten, zurückliegenden Zeitraums erfasst wurden.

4. Verfahren (200) nach einem der vorangehenden Ansprüche, wobei ein Abstand (175) zwischen der ersten Trajektorie (170) und dem Verlauf (145) bestimmt wird und die Güte umso höher ist, je kleiner der Abstand (175) ist.

5. Verfahren (200) nach einem der vorangehenden Ansprüche, wobei die Güte umso niedriger ist, je stärker eine Krümmung der Strecke (150) bei gleicher Dichte von Positionen (180) ist, die die Strecke (150) bestimmen.

6. Verfahren (250) mit folgenden Schritten:
- Bestimmen (265) eines Verlaufs einer Strecke auf der Basis vorbestimmter Kartendaten;
- Erfassen (255) einer dem Verlauf zugeordneten Güte;
- Abtasten (265) eines Umfelds eines Kraftfahrzeugs (110);
- Bestimmen (270) einer Trajektorie durch Fusionieren (265) des Verlaufs mit der Abtastung; und
- Steuern (275) des Kraftfahrzeugs (110), der Trajektorie zu folgen.

7. Verfahren (250) nach Anspruch 6, wobei eine Gewichtung des Verlaufs (145) beim Fusionieren abhängig von der Güte ist, die dem Verlauf (145) zugeordnet ist.

8. Verfahren (250) nach einem der Ansprüche 6 oder 7, wobei die Trajektorie nur dann auf der Basis des Verlaufs bestimmt (270) wird, wenn die zugeordnete Güte ein vorbestimmtes Maß erreicht.

9. Steuervorrichtung (120) für ein Kraftfahrzeug (110), wobei die Steuervorrichtung (120) folgendes umfasst:
- einen Datenspeicher (135) für Kartendaten bezüglich eines Verlaufs (145) einer Strecke (150);
- eine Empfangseinrichtung (140) zum Empfangen einer dem Verlauf (145) zugeordneten Güte;
- eine Abtasteinrichtung (142) zur Abtastung eines Umfelds des Kraftfahrzeugs (110);
- eine Verarbeitungseinrichtung (125), die dazu eingerichtet ist, eine Trajektorie durch Fusionieren des Verlaufs (145) mit der Abtastung zu bestimmen; und
- eine Steuervorrichtung (125) zur Steuerung des Kraftfahrzeugs (110), um der Trajektorie zu folgen.

10. Kraftfahrzeug (105, 110), umfassend eine Steuervorrichtung (120) nach Anspruch 9.

11. Einrichtung (115), folgende Elemente umfassend:
- eine Empfangseinrichtung (160) zum Empfangen einer ersten Trajektorie (170) eines ersten Kraftfahrzeugs (105) beim Durchfahren einer vorbestimmten Strecke (150);
- eine Verarbeitungseinrichtung (155) zum Bestimmen eines Verlaufs (145) der Strecke (150) auf der Basis vorbestimmter Kartendaten und zum Bestimmen einer Güte, mit der die erste Trajektorie (170) und der Verlauf (145) übereinstimmen;
- eine Sendeeinrichtung (160) zur Übermittlung der Güte an ein zweites Kraftfahrzeug (110), wobei die Einrichtung derart ausgebildet ist, dass die erste Trajektorie (170) eine Anzahl Positionen (180) des ersten Kraftfahrzeugs (105) umfasst und die Güte umso höher ist, je größer eine Dichte von Positionen (180) erster Kraftfahrzeuge (105) ist.

## Claims

1. Method (200) having the following steps:
- recording (215) a first trajectory (170) of a first motor vehicle (105) as it travels through a predetermined section (150);
- determining (225) a route (145) of the section (150) on the basis of predetermined map data;
- determining (240) a quality with which the first trajectory (170) and the route (145) match;
- transmitting (245) the quality to a second motor vehicle (110);
**characterized in that** the first trajectory (170) comprises a number of positions (180) of the first motor vehicle (105) and the quality is higher the greater a density of positions (180) of first motor vehicles (105).

2. Method (200) according to Claim 1, wherein a multiplicity of first trajectories (170) of first motor vehicles (105) are recorded and the quality is determined for the multiplicity of first trajectories (170) .

3. Method (200) according to Claim 2, wherein the quality is determined for first trajectories (170) recorded when the section (150) was travelled through within a predetermined period in the past.

4. Method (200) according to one of the preceding claims, wherein a distance (175) between the first trajectory (170) and the route (145) is determined and the quality is higher the shorter the distance (175).

5. Method (200) according to one of the preceding claims, wherein the quality is lower the greater a curvature of the section (150) for the same density of positions (180) that determine the section (150).

6. Method (250) having the following steps:
- determining (265) a route of a section on the basis of predetermined map data;
- recording (255) a quality associated with the route;
- scanning (265) an environment of a motor vehicle (110);
- determining (270) a trajectory by fusioning (265) the route with the scanning; and
- controlling (275) the motor vehicle (110) to follow the trajectory.

7. Method (250) according to Claim 6, wherein a weighting of the route (145) during fusioning is dependent on the quality associated with the route (145) .

8. Method (250) according to either of Claims 6 and 7, wherein the trajectory is determined (270) on the basis of the route only if the associated quality reaches a predetermined level.

9. Control apparatus (120) for a motor vehicle (110), wherein the control apparatus (120) comprises the following:
- a data memory (135) for map data regarding a route (145) of a section (150);
- a receiving device (140) for receiving a quality associated with the route (145);
- a scanning device (142) for scanning an environment of the motor vehicle (110);
- a processing device (125) configured to determine a trajectory by fusioning the route (145) with the scanning; and
- a control apparatus (125) for controlling the motor vehicle (110) in order to follow the trajectory.

10. Motor vehicle (105, 110) comprising a control apparatus (120) according to Claim 9.

11. Device (115) comprising the following elements:
- a receiving device (160) for receiving a first trajectory (170) of a first motor vehicle (105) as it travels through a predetermined section (150);
- a processing device (155) for determining a route (145) of the section (150) on the basis of predetermined map data and for determining a quality with which the first trajectory (170) and the route (145) match;
- a transmitting device (160) for transmitting the quality to a second motor vehicle (110), wherein the device is designed in such a way that the first trajectory (170) comprises a number of positions (180) of the first motor vehicle (105) and the quality is higher the greater a density of positions (180) of first motor vehicles (105).

## Revendications

1. Procédé (200) comprenant les étapes suivantes :
- détecter (215) une première trajectoire (170) d'un premier véhicule automobile (105) lors de la conduite sur un itinéraire prédéterminé (150) ;
- déterminer (225) un profil (145) de l'itinéraire (150) sur la base de données cartographiques prédéterminées ;
- déterminer (240) une qualité avec laquelle la première trajectoire (170) et le profil (145) coïncident ;
- transmettre (245) la qualité à un deuxième véhicule automobile (110) ;
- **caractérisé en ce que** la première trajectoire (170) comprend un certain nombre de positions (180) du premier véhicule automobile (105) et la qualité est d'autant plus grande qu'une densité de positions (180) de premiers véhicules automobiles (105) est élevée.

2. Procédé (200) selon la revendication 1, un grand nombre de premières trajectoires (170) de premiers véhicules automobiles (105) étant détecté et la qualité est déterminée par rapport au grand nombre de premières trajectoires (170).

3. Procédé (200) selon la revendication 2, la qualité étant déterminée par rapport à des premières trajectoires (170) qui ont été détectées lors de la conduite sur l'itinéraire (150) dans un intervalle de temps passée prédéterminé.

4. Procédé (200) selon l'une des revendications précédentes, une distance (175) est déterminée entre la première trajectoire (170) et le profil (145) et la qualité est d'autant plus grande que la distance (175) est petite.

5. Procédé (200) selon l'une des revendications précédentes, la qualité est d'autant plus faible qu'une courbure de l'itinéraire (150) est importante pour une même densité de positions (180) qui déterminent l'itinéraire (150).

6. Procédé (250) comprenant les étapes suivantes :
- déterminer (265) un profil d'un itinéraire sur la base de données cartographiques prédéterminées ;
- détecter (255) une qualité associée au profil ;
- balayer (265) un environnement d'un véhicule automobile (110) ;
- déterminer (270) une trajectoire par fusion (265) du profil et du balayage ; et
- commander (275) le véhicule automobile (110) pour qu'il suive la trajectoire.

7. Procédé (250) selon la revendication 6, une pondération du profil (145) lors de la fusion étant dépendante de la qualité qui est associée au profil (145) .

8. Procédé (250) selon l'une des revendications 6 ou 7, la trajectoire n'étant déterminée (270) à partir du profil que lorsque la qualité associée atteint un niveau prédéterminé.

9. Dispositif de commande (120) destiné à un véhicule automobile (110), le dispositif de commande (120) comprenant :
- une mémoire de données (135) destinée à des données cartographiques relatives à un profil (145) d'un itinéraire (150) ;
- un module de réception (140) destiné à recevoir une qualité associée au profil (145) ;
- un module de balayage (142) destiné à balayer un environnement du véhicule automobile (110) ;
- un module de traitement (125) qui est conçu pour déterminer une trajectoire par fusion du profil (145) et du balayage ; et
- un dispositif de commande (125) destiné à commander le véhicule automobile (110) pour qu'il suive la trajectoire.

10. Véhicule automobile (105, 110), comprenant un dispositif de commande (120) selon la revendication 9.

11. Module (115), comprenant les éléments suivants :
- un module de réception (160) destiné à recevoir une première trajectoire (170) d'un premier véhicule automobile (105) lors de la conduite sur un itinéraire prédéterminé (150) ;
- un module de traitement (155) destiné à déterminer un profil (145) de l'itinéraire (150) sur la base de données cartographiques prédéterminées et déterminer une qualité avec laquelle la première trajectoire (170) et le profil (145) coïncident ;
- un module d'émission (160) destiné à transmettre la qualité à un deuxième véhicule automobile (110), le module étant conçu de sorte que la première trajectoire (170) comprennent certain nombre de positions (180) du premier véhicule automobile (105) et que la qualité soit d'autant plus grande qu'une densité de positions (180) de premiers véhicules automobiles (105) soit élevée.
